(19) **Europäisches Patentamt**
**European Patent Office**
**Office européen des brevets**

(11) **EP 3 165 736 A1**

(12) **EUROPEAN PATENT APPLICATION**

(43) Date of publication:
**10.05.2017 Bulletin 2017/19**

(51) Int Cl.:
*F01N 11/00* (2006.01)   *F01N 3/20* (2006.01)

(21) Application number: **16153495.3**

(22) Date of filing: **29.01.2016**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(30) Priority: **03.11.2015 US 201562250226 P**

(71) Applicant: **Plastic Omnium Advanced Innovation and Research**
**1120 Bruxelles (BE)**

(72) Inventors:
- **BUTLER, Josh**
  **Bloomfield Hills, MI Michigan 48302 (US)**
- **DEDEURWAERDER, Jürgen**
  **1731 RELEGEM (BE)**
- **BAJA, Mihai**
  **1200 BRUXELLES (BE)**

(74) Representative: **Remy, Vincent Noel Paul**
**LLR**
**11 boulevard de Sébastopol**
**75001 Paris (FR)**

(54) **METHOD FOR MONITORING UREA QUALITY OF AN SCR SYSTEM**

(57)   It is proposed a method for monitoring urea concentration in a urea solution stored in a tank of a SCR system, the system comprising a pump driven by a motor wherein the pressure of the pump is controlled by a controller. The method comprises the steps of:
- measuring (320) a plurality of values characteristic of the energy transmitted by the motor to the pump for a corresponding plurality of pump pressure values;
- determining (330) at least one parameter of a relationship between the energy transmitted by the motor to the pump and applied pump pressure values from said plurality of measured values and said corresponding plurality of pump pressure values;
- comparing (350) said at least one parameter to predetermined reference parameters;
    - concluding that the urea concentration has changed (380) if the deviation (360) between said at least one parameter and said predetermined reference parameters is outside predetermined bounds.

Fig. 3

**Description**

**Field of the Invention**

The present invention relates to a method for determining fluid quality. In particular, it relates to a method for sensing urea concentration/quality in a urea solution stored in a tank of an SCR system.

**Background of the Invention**

Legislation on vehicle and heavy goods vehicle emissions stipulates, amongst other things, a reduction in the release of nitrogen oxides ($NO_x$) into the atmosphere. One known way to achieve this objective is to use the SCR (Selective Catalytic Reduction) process which enables the reduction of nitrogen oxides by injection of a reducing agent, generally ammonia, into the exhaust line. This ammonia may derive from the pyrolytic decomposition of an ammonia precursor solution, whose concentration may be the eutectic concentration. Such an ammonia precursor is generally a urea solution.

With the SCR process, the high levels of $NO_x$ produced in the engine during combustion at optimized efficiency are treated in a catalyst after exiting the engine. This treatment requires the use of the reducing agent at a precise concentration and of extreme quality. The solution is thus accurately metered and injected into the exhaust gas stream where it is hydrolyzed before converting the nitrogen oxide ($NO_x$) to nitrogen ($N_2$) and water ($H_2O$).

In order to do this, it is necessary to equip the vehicles with a tank containing an additive solution (generally an aqueous urea solution) and also a device for metering the desired amount of additive and injecting it into the exhaust line.

It is important to be able to measure urea concentration to ensure that the fluid in the tank is urea of acceptable concentration. SCR systems today implement quality sensor technology. The introduction of a urea quality sensor into the SCR system ensures that a specific quality of urea can be injected into the exhaust line. It also reduces the risk of tampering or accidental misfilling and helps ensure compliance, thus satisfying concerns of users and legislators alike.

Several urea quality sensors have been proposed. For example, application US2008/280371 describes a urea quality sensor based on ultrasound speed (acoustic resonator) in the urea liquid. Other known urea quality sensors are based on capacitance or radiofrequency technology, or on measurements of heat capacity.

When a traditional urea quality sensor is used, it remains desirable to have an additional system available to assess the plausibility of the measurement values provided by the sensor, to avoid relying on erroneous measurements in the event of a malfunction of the sensor.

International patent application publication no. WO 2014/118248 A1, in the name of the present applicant, discloses a method for monitoring urea concentration and quality in a urea solution stored in a tank of an SCR system. The system comprises a pump driven by a motor and the pressure of which is controlled by a controller. The method comprises the steps of: measuring a parameter value characteristic of the energy transmitted by the motor to the pump (e.g., the pump rotational speed); determining a urea concentration value based upon the parameter value characteristic of the energy transmitted by the motor to the pump. In a particular embodiment of WO 2014/118248 A1, the measured pump rotational speed required to keep the system at a certain desired pressure point (e.g., 5 bar) is compared to a look-up table to determine the urea concentration value. In another particular embodiment of WO 2014/118248 A1, a model of the relationship between pump rotational speed and pump pressure is generated as a function of the measured pump fluid temperature and the pump ageing. However, WO 2014/118248 A1 does not disclose in detail how such a model should be generated or used.

While the monitoring method of WO 2014/118248 A1 provides a great improvement over prior methods, it has been found that the parameters used to determine the urea quality tend to vary under the influence of other variables that are unrelated to the urea quality, such as the temperature of the liquid or ageing effects of the pump, and that these variations are not fully addressed by WO 2014/118248 A1.

Hence, there is still a need for a more accurate and robust method for determining a liquid quality - in particular the urea concentration in the urea solution for the satisfactory operation of an SCR process.

**Summary of the Invention**

According to an aspect of the present invention, there is provided a method for monitoring urea concentration in a urea solution stored in a tank of a SCR system, said system comprising a pump driven by a motor wherein the pressure of the pump is controlled by a controller, wherein the method comprises the steps of: measuring a plurality of values characteristic of the energy transmitted by the motor to the pump for a corresponding plurality of pump pressure values; determining at least one parameter of a relationship between the energy transmitted by the motor to the pump and applied pump pressure values from said plurality of measured values and said corresponding plurality of pump pressure values; and comparing said at least one parameter to predetermined reference parameters.

It is an advantage of the present invention that it provides a more accurate and robust method for monitoring the urea concentration in the urea solution for the satisfactory operation of an SCR process, by avoiding reliance on a single measurement of a parameter, the value of which may be affected by other factors than the factor of interest (the urea concentration). The present invention is *inter alia* on the insight of the inventors that monitoring (estimated) parameters of a parametric model of a physical liquid property, obtained by multiple measurements of the variables used in said model, provides a robust indication of a change of said property. The parameters can be estimated on the basis of a plurality of measurement pairs (energy characteristic and measured or set pump pressure value). Thus, the method according to the present invention could rely on two such measurement pairs. Preferably, the method is performed with more than two measurement pairs. More preferably, the method is performed with five measurement pairs, e.g. ranging between minimum operational pump speed and a pressure value above the nominal operating pressure (typically 500 kPa).

Depending on the type of pump and the regulation thereof, the parameter characteristic of the energy transmitted by the motor to the pump may be the rotational speed (for a rotary pump), the frequency (for a reciprocating pump), the current, the voltage, the torque, ... or any combination of these parameters.

In an embodiment, the method according to the present invention further comprises measuring a plurality of reference values characteristic of the energy transmitted by the motor to the pump for a corresponding plurality of pump pressure values while using a urea concentration having a reference concentration value; and determining said predetermined reference parameters from said plurality of measured reference values and said corresponding plurality of pump pressure values.

It is an advantage of this embodiment that the predetermined reference values can be accurately determined for the individual system in which the operational method will be used, such that the reference parameters adequately take into account individualized variables such as pump characteristics and pump age.

In an embodiment of the method according to the present invention, the determining of the at least one parameter comprises fitting a curve defined by the at least one parameter to the plurality of measured values and the corresponding plurality of pump pressure values.

Curve-fitting is a particularly accurate way to estimate a parameter of a modeled physical response from a series of measurements points.

In an embodiment of the present invention, the pump is a gear pump and the parameter value characteristic of the energy transmitted by the motor to the pump is the pump rotational speed value.

The inventors have found that measurements of pressure and pump rotational speed are convenient to carry out, and that these physical variables present an interrelation which lends itself very well to modeling by a parametric curve as required by the present invention.

In a specific embodiment, the curve defined by at least one parameter is a curve of the general formula $f = a \cdot p^b$, wherein $f$ is the pump rotational speed, $p$ is the pressure, and $a$ and $b$ are parameters.

The inventors have found that by using this modeled relationship between pump speed and pressure, it is possible to obtain two parameters that substantially depend on a different set of physical variables. Parameter $a$ is predominantly determined by the liquid quality (urea concentration), temperature, pump characteristics, and pump age. Parameter $b$ is predominantly determined by temperature, pump characteristics, and pump age. Hence, for example, a significant change in the tested value of parameter a relative to the reference value, without a corresponding change in the tested value of parameter $b$, can be seen as an indication of a change in the quality of the urea solution.

In an embodiment, the method according to the present invention further comprises the steps of: measuring a reference concentration value and a concentration of a currently present urea solution by means of a sensor; and comparing the evolution between said reference concentration value and said concentration of said currently present urea solution to the evolution between said reference parameters and said at least one parameter as determined for said currently present urea solution.

The term "currently present urea solution" is used to designate the urea solution that is actually present in the system, with a view to being used in the SCR process, at any given point in time; the term is used to distinguish the urea solution to be measured from the urea solution used to obtain the reference values. The currently present urea solution may be (part of) the same substance as the urea solution that was actually used to determine the reference value, which has remained in the system for some time and may in the meantime have undergone repeated heating/cooling cycles, partial evaporation, ingress of impurities, ageing, etc.

In this embodiment, the monitoring of the evolution of the parameter values occurs in parallel to the monitoring of a urea concentration measurement obtained by means of a traditional sensor. By comparing the evolution of these two types of concentration assessments, the plausibility of the measurements provided by the sensor can be assessed. In particular, if the concentration measurements provided by the traditional sensor remain constant while the model parameters obtained according to the present invention (i.e. the estimated test parameters) vary significantly, or vice versa, a malfunction of the sensor may be assumed.

In an embodiment, the method according to the present invention further comprises deriving the urea concentration by comparing said at least one parameter to predetermined reference parameters. In addition to the plausibility assessment of existing sensor, the actual parameters of the model (i.e., parameters obtained by the most recent measurements) may be used to populate a look-up table as proposed in WO 2014/118248, to allow an absolute determination of the urea concentration even outside the range that can be covered by the sensor or when the sensor is not functioning properly.

According to an aspect of the present invention, there is provided an SCR system, comprising: a tank for storing a urea solution; a pump driven by a motor; a controller for controlling the pressure of the pump; a control module including logic means configured to perform the steps of the method as described above.

According to an aspect of the present invention, there is provided a motor vehicle comprising an SCR system as described above.

The technical effects and advantages of embodiments of the SCR system and the motor vehicle according to the present invention correspond, *mutatis mutandis,* to those of the corresponding embodiments of the method according to the present invention.

**Brief Description of the Figures**

These and other technical features and advantages of the present invention will now be described in more detail with reference to the accompanying drawings, in which:

- Figure 1 illustrates how a given gear pump speed reacts to various fluid concentrations throughout a pressure range;
- Figure 2 provides a flow chart of a learning phase of a method according to an embodiment of the present invention;
- Figure 3 provides a flow chart of a method according to an embodiment of the present invention; and
- Figure 4 schematically represents a system according to an embodiment of the present invention.

**Description of Embodiments**

As explained previously, the present invention is applied to an SCR system, the purpose of which is to inject a pollution-control liquid into the exhaust gases of an internal combustion engine. Such a system generally comprises at least one tank for storing said liquid and a feed line enabling said liquid to be conveyed to the injector using the pump (placed in this line therefore). One liquid to which the present invention applies particularly well is urea.

The term "urea" is understood to mean any, generally aqueous, solution containing urea. The invention gives good results with eutectic water/urea solutions for which there is a standard quality: for example, according to the standard DIN 70070, in the case of the AdBlue® solution (commercial solution of urea), the urea concentration is between 31.8% and 33.2% (by weight) (i.e., 32.5 +/- 0.7 wt%) hence an available amount of ammonia between 18.0% and 18.8%. The invention may also be applied to the urea/ammonium formate mixtures, also in aqueous solution, sold under the trade name Denoxium™ and of which one of the compositions (Denoxium-30) contains an equivalent amount of ammonia to that of the AdBlue® solution.

As explained in international patent application publication no. WO 2014/118248 A1, in the name of the present applicant, for a given pump and under given operating conditions (for example, maintaining a constant pressure of the system at 5 bar), there is a direct correlation between the operation of the pump required to maintain the desired operating conditions and the urea concentration. A change in the composition of the urea solution (i.e. urea concentration) manifests as a change in viscosity of the urea solution (in certain cases, it can further manifest as a change in density of the operation of the pump required to maintain the desired operating conditions).

An external gear pump, which is one of the pump types frequently used in SCR systems, is a fixed displacement pump with internal leaks. The magnitude of these leaks will depend on the viscosity of the fluid to be pumped, the gap dimensions (this may be determined by the amount of slip between the gears, such as the necessary slip intended for bearing lubrication, slip between gear faces and bearing faces, slip between the gear tip and the pump housing, and slip between meshing gears), and the amount of pressure to be generated. When the injector is closed, the following relation is true:

```
pump speed X displacement = check valve flowrate + leak flowrate
```

Accordingly, measuring the pump speed is an adequate proxy for measuring the leak, which is, for given pump characteristics, indicative of the viscosity of the fluid being pumped.

When the pump speed is measured at different pressure values (i.e. different pressure set points, allowing pump speed and pressure to stabilize), the relationship between the pump speed and the pressure can be modeled.

The inventors have found that this relationship can be represented to a satisfactory degree of accuracy by an expression of the form:

$$\texttt{pump speed} = a \times \texttt{pressure}^{b}$$

where $a$ and $b$ are parameters. Given at least two measurement pairs, the parameters $a$ and $b$ may be determined by fitting the measurement pairs to the curve, e.g. with a least squares algorithm.

For aqueous urea solutions, the inventors have further found that the exponent $b$ is independent of urea concentration, while coefficient $a$ is dependent on urea concentration. Embodiments of the present invention are thus based on the insight of the inventors that it is advantageous to determine a given pump's speed/pressure relationship under reference conditions, to store it, and to determine the relationship again at a later point in time for comparison to the stored version.

Advantageously, the characteristic is stored and later compared by simply storing and comparing the parameter(s) that define the characteristic according to an appropriate model, such as the model described above. Advantageously, the parameter(s) may be stored for a range of operating temperatures.

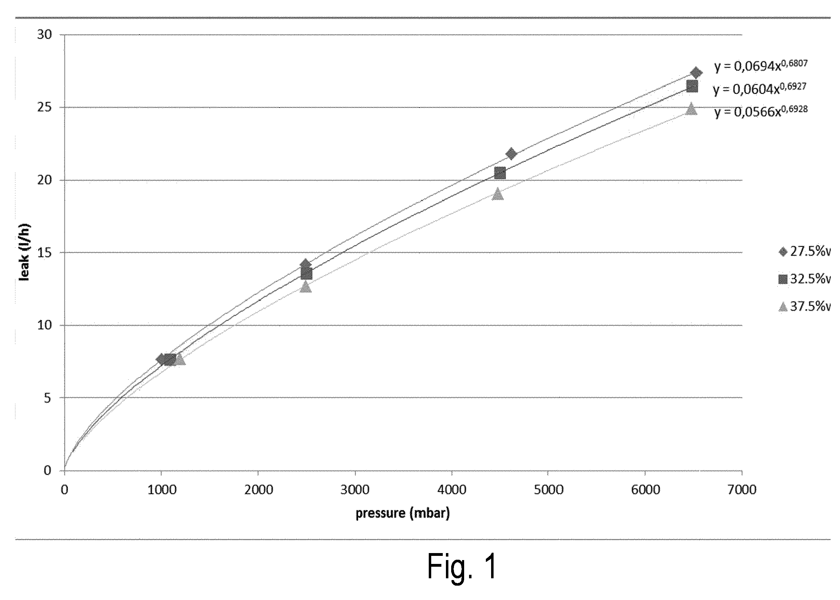

Figure 1 shows how a given gear pump speed reacts to various fluid concentrations throughout a pressure range. According to embodiments of the present invention, a given pump's characteristics are learned throughout an operating temperature range. Once this characteristic has been learned, it is used as a reference to create a ratio to determine if the fluid has changed or not.

Accordingly, if a reference concentration value and a concentration of the currently present urea solution have been obtained by means of a known sensor, the evolution of the concentration measured by the sensor can be compared to the evolution of the parameter(s) defining the speed/pressure characteristic to assess the plausibility of the measurements provided by the sensor.

The "learning" phase, i.e. the acquisition of the speed/pressure relationship under reference conditions, calibrates the method of the present invention to the specific characteristics of an individual pump. This learning is applied repetitively over the lifetime of the system to cope with other time-dependent influences, such as ageing. A validity timer may be used to take into account the ageing effect, and to prompt the system to perform a new "learning" run.

When a pump is initially taken into service, its characteristics tend to change rapidly over the first few hours, as the gears wear out the initial frictions caused by manufacturing tolerances. For this reason, an adequate break-in period has to be observed to obtain a sufficiently stable pump characteristic for application of the method according to the present invention.

The determination of a characteristic can be performed at the beginning of each drive-cycle. Typically, the data obtained by means of the method according to the present invention becomes sufficiently trustworthy (i.e., the pump characteristic becomes sufficiently stable) to reliably diagnose the operation of a known quality sensor in the same vehicle after a number of drive cycles, e.g. 5 drive cycles. Once data from an appropriate number of drive cycles at different initial temperatures are stored new sequences can extrapolate/interpolate to detect large changes in the fluid.

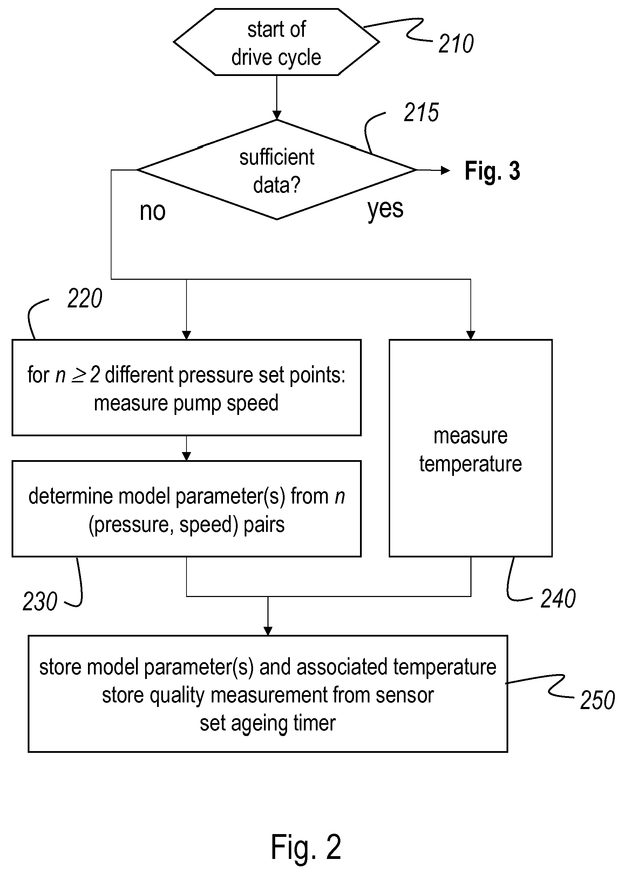

Figure 2 provides a flow chart of a learning phase of a method according to an embodiment of the present invention. Details and examples provided hereinabove apply to this embodiment, and will not always be repeated.

At the beginning of a drive cycle **210**, new measurement pairs are gathered for a given temperature. As long as there is insufficient data to perform a plausibility check or a stand-alone urea concentration assessment, the system is still in a pure "learning" mode; this is schematically represented by the test in block **215**. To obtain new measurement pairs, the temperature is measured **240**, and a predetermined number $n$ (at least 2, preferably 5) of pump speed values are measured for different pressure set points **220**. From these measurement pairs, one or more model parameters (e.g., $a$ and $b$ as defined for the model disclosed above) are determined **230,** by a conventional algorithm such as least-squares fitting. The obtained parameter(s) and associated temperature are stored and the ageing timer for these parameter values is set **250**. At the same time, for the purpose of allowing a plausibility assessment, a quality measurement obtained from an optional independent quality sensor may be stored. The process is repeated at the start of each subsequent drive cycle **210**, until a sufficient number of parameter values for different temperatures (e.g. 5) is available **215**.

While it is possible in principle to work with representative parameter values measure at a single temperature (in which case, measuring and storing the temperature is not strictly necessary), it is preferred to gather sufficient data points to allow interpolation of the parameter values to other temperature values than those at which the parameter values were obtained.

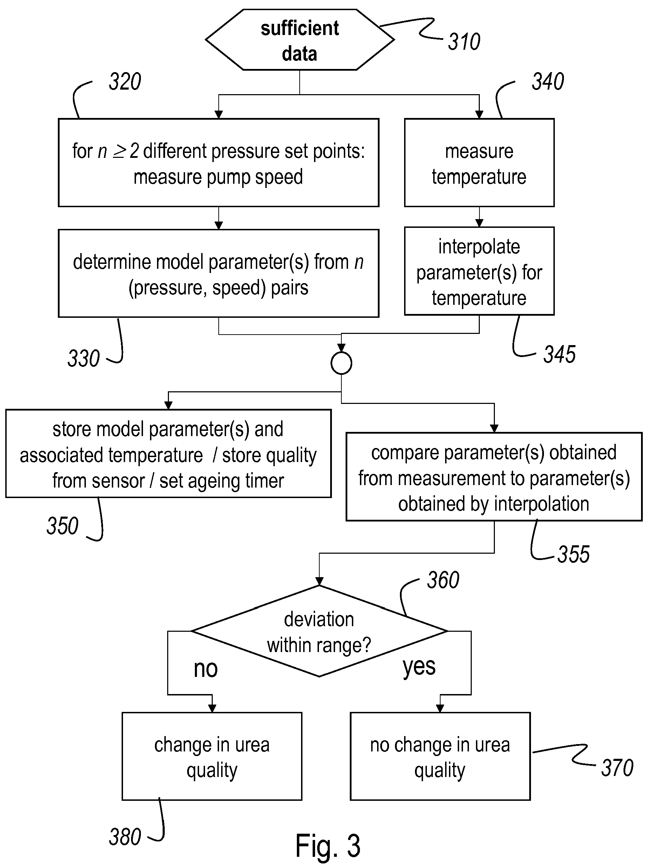

Figure 3 provides a flow chart of a method according to an embodiment of the present invention.

If, at the start of a drive cycle **210**, it is determined **215** that there is sufficient data **310** for a plausibility assessment, new measurement pairs are gathered. To this end, a predetermined number $n$ (at least 2, preferably 5) of pump speed values are measured for different pressure set points **320**. From these measurement pairs, one or more model parameters (e.g., *a* and *b* as defined for the model disclosed above) are determined **330**, by a conventional algorithm such as least-squares fitting. Meanwhile, the temperature is measured **340**, and the expected value of the model parameter(s) is retrieved by interpolation **345** from the previously stored parameter/temperature pairs (see Figure 2, step **250**). The obtained parameter(s) and associated temperature are stored, and the ageing timer for these parameter values is set **350**, so as to provide a permanent but gradual updating of the "learned" characteristics of the system. Optionally, a quality measurement obtained from an optional independent quality sensor may be stored.

The parameter(s) obtained from the measurements (**320**, **330**) is/are compared **355** to the parameter(s) obtained from the interpolation (**345**). If the deviation between the two (sets of) parameters is within predetermined bounds **360**, the system concludes that the urea viscosity (and thus its quality) has not changed **370**. If the deviation between the two (sets of) parameters is outside the predetermined bounds **360**, the system concludes that the urea viscosity (and thus its quality) has changed **380**. In each case, the conclusion regarding the urea quality can be cross-checked with the output of a separate urea quality sensor; if the conclusion reached according to the flow chart of Figure 3 does not corroborate the output of the separate urea quality sensor, this may be indicative of a malfunction of said sensor.

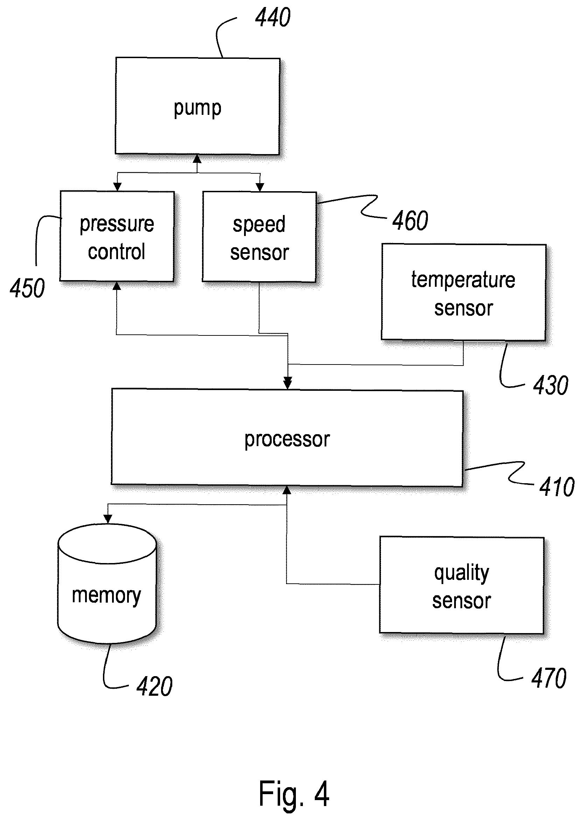

The present invention also pertains to an SCR system (see also Figure 4) comprising a control module or processor **410** configured to carry out the methods described above. The controller **430** may be implemented in dedicated hardware (e.g., ASIC), configurable hardware (e.g., FPGA), programmable components (e.g., a DSP or general purpose processor with appropriate software), or any combination thereof. The same component(s) may also include other functions; in particular it may be part of the vehicle's ECU. A pump **440**, preferably a gear pump, is arranged to convey a urea solution from a tank to an injector (not shown). The pump is arranged to operate at a selected pressure set point (for normal operation, this would be a fixed value such as 500 kPa, for the purpose of the present invention, the pressure set point will be varied); pressure control may be achieved by means of conventional control techniques, such as a control signal with measurement of actual pressure and feedback of an error signal (these details are not shown in the diagram, but collectively indicated by pressure control block **450**). The processor **410** is capable of determining the instantaneous pressure by communication with pressure control block **450**. The processor **410** further has access to the instantaneous speed of the pump, for example by assessing the amount of current being drawn by the pump's motor in the case of a brush-based DC motor or by performing a back-EMF assessment in the case of a BLDC motor (these details are not shown in the diagram, but collectively indicated by speed sensor block **460**). Preferably, the processor **410** has access to the present temperature of the solution being pumped, by means of an adequately positioned temperature sensor **430**. A memory **420** is provided for the storage (see step **250** in Figure 2 and step **350** in Figure 3) and retrieval (see step **345** in Figure 3) of parameter values. The processor **410** may further have access to an optional independent quality sensor **470**.

While the invention has been described hereinabove with reference to separate system and method embodiments, this was done for clarifying purposes only. The skilled person will appreciate that features described in connection with the system or the method alone, can also be applied to the method or the system, respectively, with the same technical effects and advantages. Furthermore, the scope of the invention is not limited to these embodiments, but is defined by the accompanying claims.

**Claims**

1. A method for monitoring urea concentration in a urea solution stored in a tank of a SCR system, said system comprising a pump driven by a motor wherein the pressure of the pump is controlled by a controller, wherein the method comprises the steps of:

   - measuring (320) a plurality of values characteristic of the energy transmitted by the motor to the pump for a corresponding plurality of pump pressure values;
   - determining (330) at least one parameter of a relationship between the energy transmitted by the motor to the pump and applied pump pressure values from said plurality of measured values and said corresponding plurality of pump pressure values; and
   - comparing (350) said at least one parameter to predetermined reference parameters.

2. The method according to claim 1, further comprising:

   - measuring (220) a plurality of reference values characteristic of the energy transmitted by the motor to the pump for a corresponding plurality of pump pressure values while using a urea concentration having a reference concentration value; and
   - determining (230) said predetermined reference parameters from said plurality of measured reference values and said corresponding plurality of pump pressure values.

3. The method according to claim 1 or claim 2, wherein said determining (230; 330) of said at least one parameter comprises fitting a curve defined by said at least one parameter to said plurality of measured values and said corresponding plurality of pump pressure values.

4. The method according to any of the preceding claims, wherein the pump (440) is a gear pump and the parameter value characteristic of the energy transmitted by the motor to the pump is the pump rotational speed value.

5. The method according to claim 4, wherein said curve defined by at least one parameter is a curve of the general formula $f = a \cdot p^b$, wherein $f$ is said pump rotational speed, $p$ is said pressure, and a and b are parameters.

6. The method according to any one of the preceding claims, further comprising the steps of:

   - measuring a reference concentration value and a concentration of a currently present urea solution by means of a sensor; and
   - comparing the evolution between said reference concentration value and said concentration of said currently present urea solution to the evolution between said reference parameters and said at least one parameter as determined for said currently present urea solution.

7. The method according to any of the preceding claims, further comprising deriving the urea concentration by comparing (350) said at least one parameter to predetermined reference parameters.

8. An SCR system, comprising:

   a tank for storing a urea solution;
   a pump (440) driven by a motor;
   a controller (450) for controlling the pressure of the pump;
   a control module (410) including logic means configured to perform the steps of the method according to any of claims 1-7.

9. A motor vehicle comprising the SCR system according to claim 8.

Fig. 1

```
        ┌─────────────┐
        │   start of  │  ── 210
        │ drive cycle │
        └─────────────┘
               │
               ▼
           ╱───────╲       ── 215
no    ╱  sufficient  ╲   yes  ──►  Fig. 3
      ╲    data?    ╱
        ╲───────╱
```

for $n \geq 2$ different pressure set points: measure pump speed
— 220

determine model parameter(s) from $n$ (pressure, speed) pairs
230

measure temperature
240

store model parameter(s) and associated temperature
store quality measurement from sensor
set ageing timer
— 250

Fig. 2

Fig. 3

Fig. 4

Europäisches
Patentamt

European
Patent Office

Office européen
des brevets

**EUROPEAN SEARCH REPORT**

Application Number

EP 16 15 3495

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A,D | WO 2014/118248 A1 (INERGY AUTOMOTIVE SYSTEMS RES [BE]; THOMPSON JAMES EDWARD [US]; HABUMU) 7 August 2014 (2014-08-07) * claims 1-10 * * figures 1-3 * | 1-9 | INV. F01N11/00 F01N3/20 |
| A | FR 2 915 765 A1 (RENAULT SAS [FR]) 7 November 2008 (2008-11-07) * page 6, line 25 - page 12, line 24 * * figures 1-3 * | 1-9 | |
| A | JP 2001 020724 A (ISUZU MOTORS LTD) 23 January 2001 (2001-01-23) * abstract * | 1-9 | |
| A | FR 2 997 998 A1 (INERGY AUTOMOTIVE SYSTEMS RES [BE]) 16 May 2014 (2014-05-16) * abstract * | 1-9 | |
| A | DE 10 2012 221828 A1 (BOSCH GMBH ROBERT [DE]) 5 June 2014 (2014-06-05) * claims 1,4 * * figure 1 * | 1-9 | TECHNICAL FIELDS SEARCHED (IPC) F01N |

The present search report has been drawn up for all claims

| Place of search | Date of completion of the search | Examiner |
|---|---|---|
| Munich | 28 July 2016 | Ikas, Gerhard |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 16 15 3495

This annex lists the patent family members relating to the patent documents cited in the above-mentioned European search report.
The members are as contained in the European Patent Office EDP file on
The European Patent Office is in no way liable for these particulars which are merely given for the purpose of information.

28-07-2016

| Patent document cited in search report | | Publication date | Patent family member(s) | | Publication date |
|---|---|---|---|---|---|
| WO 2014118248 | A1 | 07-08-2014 | CN | 104968909 A | 07-10-2015 |
| | | | EP | 2826972 A1 | 21-01-2015 |
| | | | EP | 2951410 A1 | 09-12-2015 |
| | | | JP | 2016513197 A | 12-05-2016 |
| | | | US | 2015354429 A1 | 10-12-2015 |
| | | | WO | 2014118248 A1 | 07-08-2014 |
| FR 2915765 | A1 | 07-11-2008 | AT | 496203 T | 15-02-2011 |
| | | | EP | 2140116 A2 | 06-01-2010 |
| | | | FR | 2915765 A1 | 07-11-2008 |
| | | | WO | 2008139108 A2 | 20-11-2008 |
| JP 2001020724 | A | 23-01-2001 | NONE | | |
| FR 2997998 | A1 | 16-05-2014 | CN | 104797791 A | 22-07-2015 |
| | | | EP | 2923049 A1 | 30-09-2015 |
| | | | FR | 2997998 A1 | 16-05-2014 |
| | | | US | 2015292385 A1 | 15-10-2015 |
| | | | WO | 2014076654 A1 | 22-05-2014 |
| DE 102012221828 A1 | | 05-06-2014 | NONE | | |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2008280371 A
- WO 2014118248 A1
- WO 2014118248 A